# EUROPEAN PATENT APPLICATION

(11) **EP 2 053 519 A1**
(43) Date of publication of application: **29.04.2009**
(21) Application number: 08018249.6
(22) Date of filing: 17.10.2008
(51) Int. Cl.: G06F 12/08

(54) **Data processing apparatus and program for same**

(30) Priority: 22.10.2007 JP 2007273899
(71) Applicant: DENSO CORPORATION, Kariya-city, Aichi-pref. 448-8661 (JP)
(72) Inventor: Nakasato, Hiroki, Kariya-city Aichi-pref. 448-8661 (JP)
(74) Representative: Winter, Brandl, Fürniss, Hübner Röss, Kaiser, Polte Partnerschaft Patent- und Rechtsanwaltskanzlei

(57) **Abstract**

The present invention provides a data processing apparatus (10) capable of maintaining consistency of specific data without switching between a write-back method and a write-through method. A first microcomputer of an engine ECU performs data updating in the write-back method. In the case of performing data writing process on specific data, the data writing process is performed on dummy data having the same index and a different tag (forced write-back). Consequently, the specific data written in a cache memory (23, 33) is evicted from the cache memory (23, 33) immediately by writing of the dummy data and is written in a main-storage RAM (21, 31). Therefore, without switching the write-back method to the write-through method, the same specific data can be stored in both of the cache memory (23, 33) and the main-storage RAM (21, 31).

## Description

The present invention generally relates to a data processing apparatus for updating data in a write-back method.

Hitherto, in the case of using a processor having performance higher than that of a main storage, to address a problem such that the performance of the processor cannot be sufficiently displayed due to the low performance of the main storage as a bottleneck, a configuration is used in which the processing speed is increased by decreasing an access to the main storage from the processor by copying part of data stored in the main storage to a cache memory having a higher processing speed than the main storage.

As data updating methods in such a configuration, a write-through method and a write-back method are known.

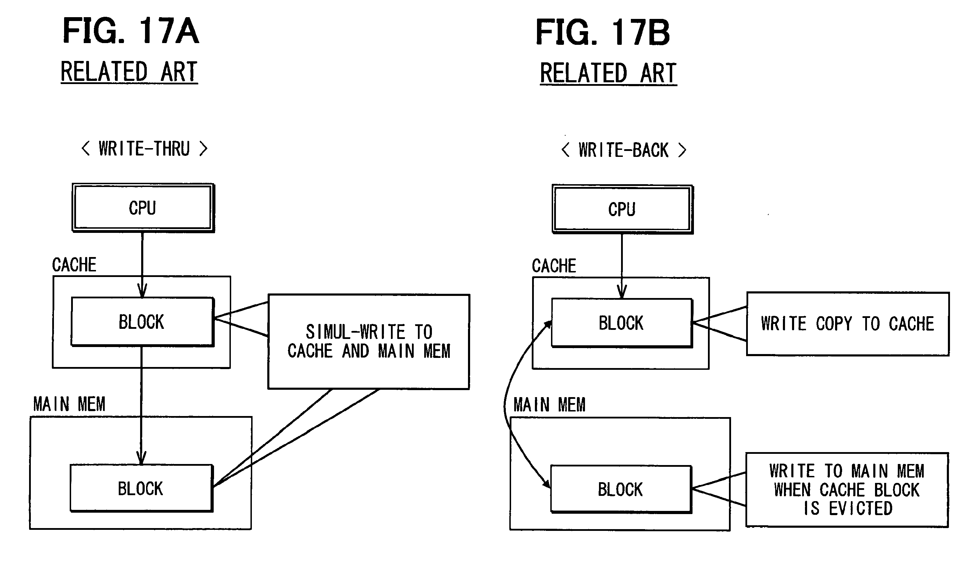

In the write-through method, as shown in FIG. 17A, when a CPU (processor) performs a data writing process, data is written in a block in a cache memory and, simultaneously, data is written in a corresponding block in a main storage. There is consequently an advantage that consistency of data between the main storage and the cache memory is held. However, there is a problem such that the processing speed decreases by the amount of increasing the frequency of an access to the main storage. The method is not suitable for high-speed process.

On the other hand, in the write-back method, as shown in FIG. 17B, when the CPU (processor) performs a data writing process, in the case where data of the same address is stored in a block in a cache memory, only the data in the cache memory is updated without updating the data in a main storage. When the necessity of overwriting data stored in the cache memory with data of a different address arises, the stored data is written in a corresponding block in the main storage.

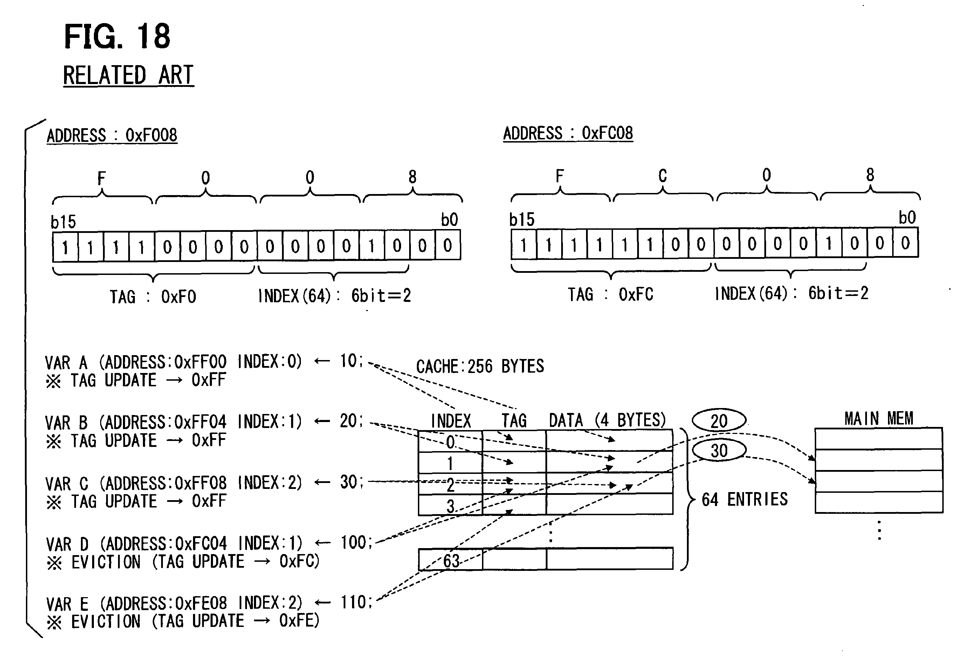

As an example of the write back method, an evicting mechanism of a direct mapping system (i.e., one-way set associative method) will be described with reference to FIG. 18.

When the size of one block is made of four bytes in a data cache memory of 256 bytes, 64 (= 256/4) blocks exist. In the cache memory, data obtained by extracting upper eight bits of an address in the main storage is stored as a tag for each of 0 to 63 indexes (block numbers). Data obtained by extracting six bits in lower eight bits of an address (since the cache is a 4-byte cache, lower two bits are unnecessary) is used as an index. For example, when the address is 0xF008 (0x: prefixed part in hexadecimal), the tag is "0xF0", and the index is "2': When the address is "0xFC08", the tag is "0xFC", and the index is "2".

In determination of a cache hit, when data having the same index and the same tag as those extracted from the address of data to be written exists in the cache memory, a hit is determined. When such data does not exist, a mishit occurs. In the case of a mishit, data of the corresponding index existing in the cache memory is evicted from the cache memory and is written in the main storage. The address in the main storage, of data existing in the cache memory is found from the tag and the index.

It is assumed that the following processes (1) to (5) are performed in order.
(1) 10 is assigned to a variable A (address: 0xFF00, index: 0)
(2) 20 is assigned to a variable B (address: 0xFF04, index: 1)
(3) 30 is assigned to a variable C (address: 0xFF08, index: 2)
(4) 100 is assigned to a variable D (address: 0xFC04, index: 1)
(5) 110 is assigned to a variable E (address: 0xFE08, index: 2)

In this case, first, by the process (1), the tag of the index "0" in the cache memory is updated to "0xFF", and data "10" is written.

Subsequently, by the process (2), the tag of the index "1" in the cache memory is updated to "0xFF", and data "20" is written.

By the process (3), the tag of the index "2" in the cache memory is updated to "0xFF", and data "30" is written.

By the process (4), the tag of the index "1" in the cache memory is updated to "0xFC", and data "100" is written. At this time, the data "20" written in the cache memory by the process (2) is evicted from the cache memory and written to the main storage (occurrence of eviction due to a mishit).

Subsequently, by the process (5), the tag of the index "2" in the cache memory is updated to "0xFE", and the data "110" is written. At this time, the data "30" written in the cache memory by the process (3) is evicted from the cache memory and written to the main storage (occurrence of eviction due to a mishit).

That is, in the write-back method, only after data stored in the cache memory is evicted from the cache memory, the data is written in the main storage. Consequently, as compared with the write-through method, an access to the main storage can be largely reduced, and there is an advantage that the processing speed becomes high. On the contrary, until eviction due to a mishit occurs, the latest data stored in the cache memory is not written in the main storage, and the consistency of the data is not held. Therefore, when the data consistency between the cache memory and the main storage is required even for a part of data, a problem that the write-back method cannot be employed arises.

To address the problem, a technique using the write-through method only at the time of accessing a specific memory (a patent document 1) and a technique having a mechanism of arbitrarily switching between the two methods during operation (a patent document 2) are proposed.:
Patent Document 1: JP-A-H02-226449
Patent Document 2: JP-A-H06-348592

However, in the techniques proposed in the patent documents 1 and 2, the write-through method and the write-back method are switched. That is, a problem that an extra circuit (hardware) for switching the two methods is required still exists in the proposed techniques.

The present invention has been achieved in view of the above and other problems. An object of the invention is to provide a data processing apparatus capable of maintaining consistency of specific data without switching between a write-back method and a write-through method.

To achieve the object, a data processing apparatus according to an aspect of the present invention updates data in a write-back method using a cache memory. More concretely, the data processing apparatus includes: a main memory for storing data; and a processor for performing a data read process for reading data stored in the main memory and a data write process for writing data to the main memory. The data processing apparatus has also a cache memory for storing a part of data stored in the main memory together with an address, and for one of serving as an alternative of the main memory and serving as a co-storage of the main memory in the data read process and the data write process by the processor.

In the data processing apparatus, when the processor performs the data write process on specific data, the data write process is performed on dummy data whose address is different from that of the specific data but whose write position in the cache memory is the same as that of the specific data.

That is, in the data updating in the write-back method, when the data write process is performed by the processor, if data having the same address as that of data to be written exists in the cache memory, only the data existing in the cache memory is updated but the data stored in the main memory is not updated. Consequently, a situation may occur that the data stored in the cache memory and that stored in the main memory is different from each other.

Therefore, when the data write process is performed on specific data, the data processing apparatus of the present invention performs the data write process on dummy data whose address is different from that of the specific data but whose write position in the cache memory is the same as that of the specific data. Consequently, the specific data written in the cache memory is immediately evicted from the cache memory due to writing of the dummy data, and is written in the main memory. That is, the latest specific data is written not only in the cache memory but also in the main memory like in the write-through method.

Therefore, the data processing apparatus of the present invention can maintain the consistency of specific data using the configuration of the conventional write-back method as it is without switching to the write-through method. In addition, since data other than the specific data is updated by the conventional write-back method, the process can be performed at a speed faster than that of the write-through method.

Further, the present invention can be implemented as a program of instructions that is stored and used in a computer. That is, a program product of computer readable instructions stored in a computer readable medium for controlling a computer to be serving as a data processing apparatus, and the apparatus uses a write-back method in updating data, by using the following components. That is, a main memory for storing data, a processor for performing a data read process to read data stored in the main memory and for performing a data write process to write data to the main memory, and a cache memory for storing a part of the data stored in the main memory together with an address of the part of the data and for serving one of as an alternative of the main memory and as a co-storage of the main memory in the data read process and the data write process. The program product for controlling the computer includes an instruction of controlling the processor to perform the data write process of dummy data that occupies a same write position in the cache memory as specific data after controlling the processor to perform the data write process of the specific data having a different address relative to the dummy data.

With such a program, the computer can provide a function as the data processing apparatus, and the above-described effects can be achieved.

Other objects, features and advantages of the present invention will become more apparent from the following detailed description made with reference to the accompanying drawings, in which:
FIG. 1 is a block diagram showing a schematic configuration of an engine ECU of a first embodiment;
FIGS. 2A and 2B are diagrams illustrating processes executed by the engine ECU of the first embodiment;
FIG. 3 is a flowchart of water temperature sensor fault diagnosing process executed by a main CPU of the first embodiment (process performed when forced write-back is not performed);
FIG. 4 is a flowchart of an engine control process executed by a sub CPU of the first embodiment;
FIG. 5 is a flowchart of a water-temperature sensor fault diagnosing process executed by a main CPU of the first embodiment (process performed when forced write-back is performed);
FIG. 6 is a diagram illustrating an eviction code inserting method;
FIG. 7 is a diagram showing a write address of an eviction code;
FIG. 8 is a block diagram showing a schematic configuration of an engine ECU of a second embodiment;
FIGS. 9A and 9B are diagrams illustrating processes executed by the engine ECU of the second embodiment;
FIG. 10 is a flowchart of water temperature sensor fault diagnosing process executed by a first CPU of the second embodiment (process performed when forced write-back is not performed);
FIG. 11 is a flowchart of an engine control process executed by a second CPU of the second embodiment;
FIG. 12 is a flowchart of a water-temperature sensor fault diagnosing process executed by the first CPU of the second embodiment (process performed when forced write-back is performed);
FIG. 13 is a block diagram showing a schematic configuration of an engine ECU of a third embodiment;
FIGS. 14A and 14B are diagrams illustrating processes executed by the engine ECU of the third embodiment;
FIG. 15 is a diagram illustrating a modification of an eviction code inserting method;
FIG. 16 is a diagram illustrating another modification of the eviction code inserting method;
FIGS. 17A and 17B are diagrams illustrating data updating in the write-through method and the write-back method; and
FIG. 18 is a diagram showing an eviction mechanism of a cache memory of the direct mapping system.

Embodiments to which the present invention is applied will be described below with reference to the drawings.

### (1. First Embodiment)

First, an engine ECU of a first embodiment will be described.

### (1-1. General Configuration)

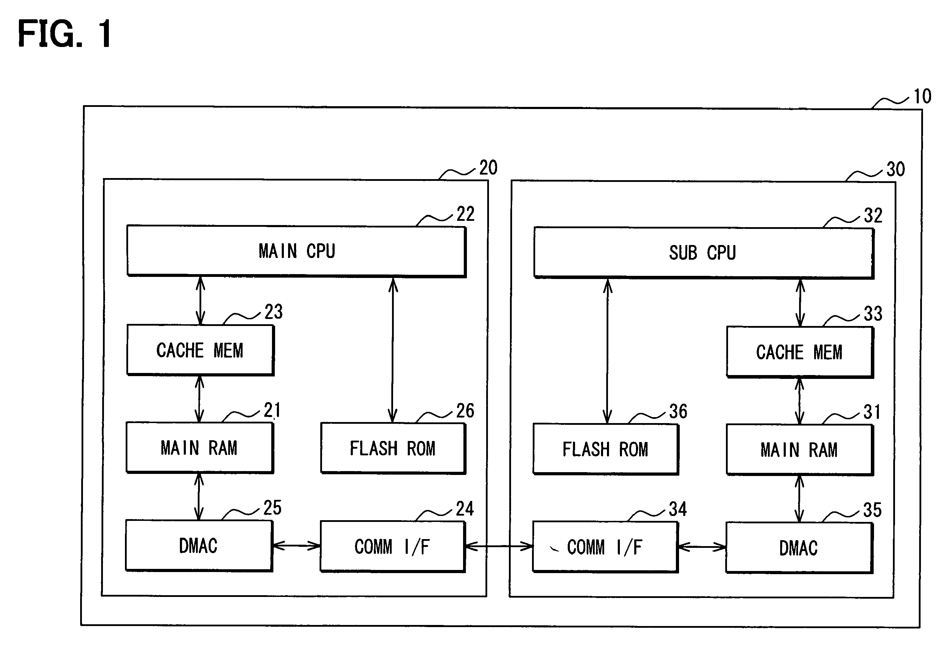

FIG. 1 is a block diagram showing a schematic configuration of an engine ECU 10 of a first embodiment.

The engine ECU 10 is an electronic control unit for controlling the engine of a vehicle (car), and has a first microcomputer 20 for mainly performing a diagnostic process (fault diagnosis of a sensor and the like), and a second microcomputer 30 for mainly performing a process for engine control.

The first microcomputer 20 has a main-storage RAM 21 as a main storage for storing data, and a main CPU 22 as a processor for performing a data reading process for reading data stored in the main-storage RAM 21 and a data writing process for writing data to the main-storage RAM 21.

The first microcomputer 20 has a data cache memory (hereinbelow, simply called "cache memory") 23 capable of storing part of the data stored in the main-storage RAM 21 together with the address of the data, and on which, in place of the main-storage RAM 21 or together with the main-storage RAM 21, the data reading process and the data writing process of the main CPU 22 are performed. The first microcomputer 20 updates data in the write-back method using the cache memory 23.

Further, the first microcomputer 20 has a communication interface 24 for performing data communication with the second microcomputer 30 and a DMA controller 25 for transferring data stored in the main-storage RAM 21 to a main-storage RAM 31 of the second microcomputer 30.

In addition, the first microcomputer 20 has a flash ROM 26 dedicated to read data (and incapable of writing data).

On the other hand, the second microcomputer 30 is constructed in a manner similar to the first microcomputer 20. The second microcomputer 30 has a main-storage RAM 31, a sub CPU 32, a cache memory 33, a communication interface 34, a DMA controller 35, and a flash ROM 36.

### (1-2. Process Performed by Engine ECU)

The process performed by the engine ECU 10 will be described.

In the two microcomputers 20 and 30 of the engine ECU 10, data stored in the main-storage RAM 21 of the first microcomputer 20 is transferred to the main-storage RAM 31 of the second microcomputer 30. Even when the data stored in the cache memory 23 of the first microcomputer 20 is the latest, if the data stored in the main-storage RAM 21 of the first microcomputer 20 is not the latest (is old), the old data is transferred to the main-storage RAM 31 of the second microcomputer 30, and a process based on the old data is performed in the second microcomputer 30.

In the first microcomputer 20, when the main CPU 22 performs the data writing process on specific data, immediately after that, the data writing process is performed on dummy data having the same index as that of the specific data and having a different tag, thereby performing a process of forcefully evicting the specific data from the cache memory 23 (hereinbelow, called "forced write-back").

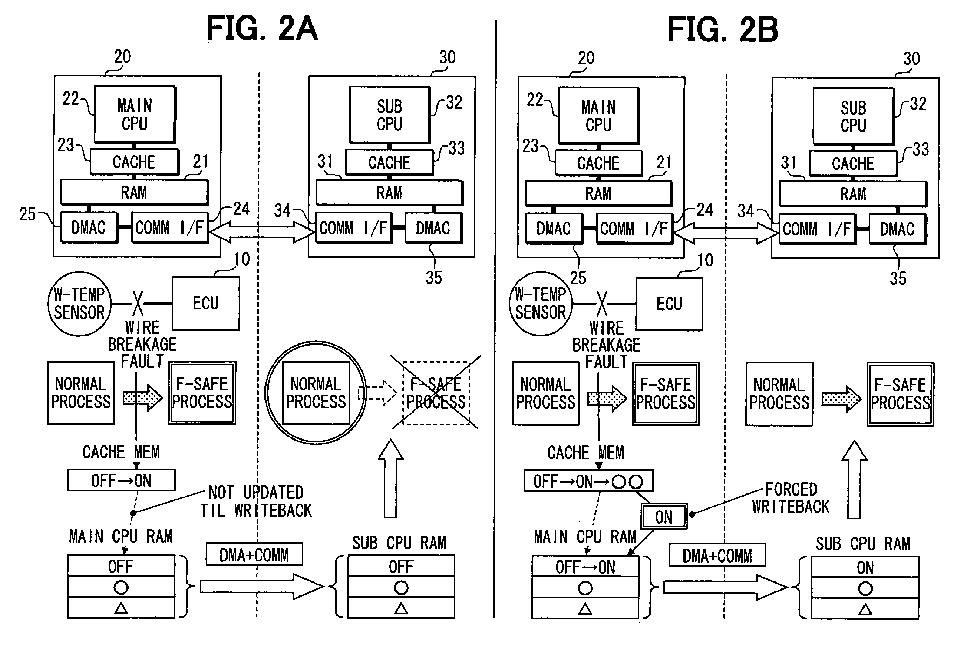

To make the effect of the forced write-back easily understood, process (FIG. 2B) in the case of performing the forced write-back will be described in comparison with process (FIG. 2A) that does not perform the forced write-back.

### (1-2-1. The Case Where Forced Write-back Is Not Performed)

First, the process of the forced write-back will be described.

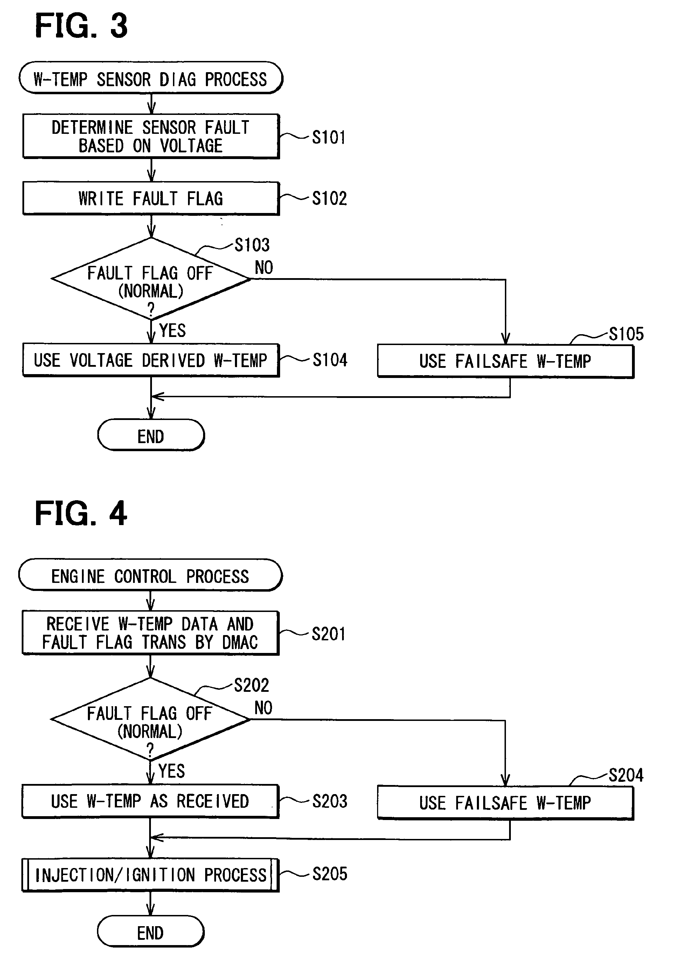

FIG. 3 is a flowchart of water temperature sensor fault diagnosing process periodically executed by the main CPU 22 in accordance with the program stored in the flash ROM 26.

The main CPU 22 linearizes voltage data of a digital value obtained by A/D converting voltage detected by a water temperature sensor (sensor provided to detect engine water temperature) to engine water temperature on the basis of a pre-stored map. At this time, the main CPU 22 determines whether a fault (disconnection fault or short-circuit fault) occurs in the water temperature sensor or not on the basis of the voltage data (S101). More concretely, in the case of a circuit in which the voltage value becomes the minimum value (0V) when a short-circuit fault occurs and the voltage value becomes the maximum value when a disconnection fault occurs, for example, when the voltage value is less than 0.5 V, a short-circuit fault is determined. When the voltage value exceeds 4.5 V, a disconnection fault is determined.

The main CPU 22 performs a process of writing the determination result as data of a water temperature sensor abnormality flag (S102).

More concretely, when data of the water temperature sensor abnormality flag is not stored in the cache memory 23 because of the writing of the write-back method, that is, in the case of a mishit, the data of the water temperature sensor abnormality flag stored in the main-storage RAM 21 is updated and, after that, the updated data is loaded to the cache memory 23. That is, the latest data in the water temperature sensor abnormality flag is stored in both of the cache memory 23 and the main-storage RAM 21.

On the contrary, when data of the water temperature sensor abnormality flag is stored in the cache memory 23, that is, in the case of a cache hit, only the data of the water temperature sensor abnormality flag stored in the cache memory 23 is updated. On the other hand, the data of the water temperature sensor abnormality flag stored in the main-storage RAM 21 is not updated until the data of the water temperature sensor abnormality flag stored in the cache memory 23 is evicted.

After that, the main CPU 22 determines whether the data of the water temperature sensor abnormality flag is OFF (normal) or not (S103).

When it is determined that the data of the water temperature sensor abnormality flag is OFF (normal) (YES in S103), it is set so that the engine water temperature based on the voltage detected by the water temperature sensor is used for various processes (S104).

On the other hand, when it is determined that the data of the water temperature sensor abnormality flag is not OFF, that is, is ON (abnormal) (NO in S103), it is set so that engine water temperature (80 °C) of a failsafe value is used for various processes (S105).

FIG. 4 is a flowchart of engine control process executed by the sub CPU 32 in accordance with the program stored in the flash ROM 36.

When the sub CPU 32 receives the engine water temperature and data of the water temperature sensor abnormality flag transferred by the DMA controller 25 in the first microcomputer 20 (S201), the sub CPU 32 determines whether the data of the received water temperature sensor abnormality flag is OFF (normal) or not (S202). The data of the water temperature abnormality flag transferred from the DMA controller 25 of the first microcomputer 20 is the same as that stored in the main-storage RAM 21 of the first microcomputer 20.

When it is determined that the data of the water temperature sensor abnormality flag is OFF (normal) (YES in S202), it is set so that the engine water temperature received from the first microcomputer 20 is used for various processes (S203).

On the other hand, when it is determined that the data of the water temperature sensor abnormality flag is not OFF, that is, is ON (abnormal) (NO in S202), it is set so that engine water temperature (80 °C) of the failsafe value is used for various processes (S204).

The sub CPU 2 executes an injection/ignition process based on the set engine water temperature (S205).

The reason why the engine water temperature of the failsafe value is used when the water temperature sensor fails is as follows. If the voltage detected by the water temperature sensor in the fault state is converted as it is to engine water temperature, extremely low temperature is detected in the case of a disconnection fault, and extremely high temperature is detected in the case of a short-circuit fault.

In the engine injection process, when the engine water temperature is low in map interpolating process for calculating an injection amount of fuel injected from an injector, warming-up control is performed early and the injection amount is increased so as to make the engine water temperature close to proper temperature (about 80 °C), and control for increasing the engine water temperature is performed. Consequently, for example, when a disconnection fault occurs in the water temperature sensor, if the abnormal state is not transmitted to the sub CPU 32 which performs the injection process, the state of an extremely low water temperature (for example, -40 °C) is determined as a normal state. Even if the actual engine water temperature is a proper temperature (80 °C), the injection amount is continuously increased, thereby causing deterioration in fuel consumption, accidental fire, or the like.

In the ignition process of the engine, when the engine water temperature is low, combustion speed is low. Therefore, a control of advancing the spark is performed for stable driving and improvement in fuel consumption (warm-up advancing correction). In the control, the lower the water temperature is, the more the warm-up is advanced. Consequently, when a disconnection fault occurs in the water temperature sensor, if the abnormal state is not transmitted to the sub CPU 32 which performs the ignition process, the normal state is determined in spite of the fact that the water temperature is extremely low (for example, -40 °C). In that case, the advance control at -40 °C is continued, and it causes knocking and deterioration in fuel consumption.

Failsafe process for performing control for a proper water temperature, a proper injection amount, and a proper injection timing on an assumption that the water temperature is 80 °C is performed.

By such a process, as shown in FIG. 2A, for example, when a disconnection fault in the water temperature sensor is detected in the first microcomputer 20, if data of the water temperature sensor abnormality flag exists in the cache memory 23, only the data in the cache memory 23 is updated (OFF→ON), and the data in the main-storage RAM 21 remains old (OFF).

In this case, the data in the main-storage RAM 21 in the first microcomputer 20 is transferred to the main-storage RAM 31 in the second microcomputer 30 by the DMA controller 25. However, data obtained for transmission by the DMA controller 25 is the data (OFF) in the main-storage RAM 21 in which the latest state is not reflected, and the latest data (ON) of the cache memory 23 is not transmitted. Therefore, the main CPU 22 performs various processes using 80 °C which is the failsafe value as the engine water temperature, while the sub CPU 32 performs the control using the engine water temperature (for example, -40 °C) obtained by converting the detection voltage in a state where a disconnection fault occurs. As a result, the influence of the data discrepancy is exerted on the injection/ejection process and the like.

### (1-2-2. The Case Where Forced Write-back Is Performed)

Next, the process of the forced write-back will be described.

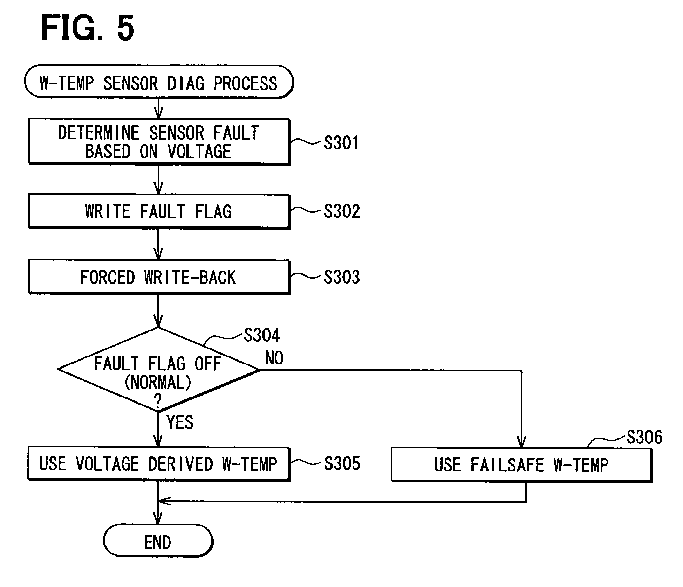

FIG. 5 is a flowchart of water temperature sensor fault diagnosing process periodically executed by the main CPU 22 in accordance with the program stored in the flash ROM 26. The water temperature sensor diagnosing process is compared with that in FIG. 3. The processes in S301, S302, S304, S305, and S306 are the same as those in S101 to S105, respectively. The different point is that process in S303 is added.

Specifically, the main CPU 22 performs a process of writing the result of determination of whether the water temperature sensor fails or not as data of the water temperature sensor abnormality flag to the cache memory 23 (S302) and, after that, performs the forced write-back process (S303).

More concretely, the main CPU 22 performs the process of writing data of the water temperature sensor abnormality flag to the cache memory 23 and, immediately after that, performs the process of writing dummy data having the same index as that of the water temperature sensor abnormality flag and having a different tag. By the process, the latest data of the water temperature sensor abnormality flag written in the cache memory 23 immediately before the dummy data is written is evicted from the cache memory 23 and is written in the main-storage RAM 21. As a result, with respect to the data of the water temperature sensor abnormality flag, the latest data is always stored in the main-storage RAM 21. The abnormal state of the water temperature sensor is immediately detected also in the sub CPU 32, and the control at the engine water temperature of 80 °C that serves as the failsafe value is performed.

Since the engine control process executed by the sub CPU 32 is as described above (FIG. 4), the description will not be repeated.

By such a process, as shown in FIG. 2B, when a disconnection fault in the water temperature sensor is detected in the first microcomputer 20, if data of the water temperature sensor abnormality flag exists in the cache memory 23, the main-storage RAM 21 is not updated but only the data in the cache memory 23 is updated (OFF→ON). Immediately after that, dummy data is overwritten. As a result, the latest data (ON) of the water temperature sensor abnormality flag which has just been written in the cache memory 23 is evicted, and the data of the water temperature sensor abnormality flag stored in the main-storage RAM 21 is updated (OFF→ON).

As a result, the latest data (ON) of the water temperature sensor abnormality flag stored in the main-storage RAM 21 is transferred to the main-storage RAM 31 in the second microcomputer 30 by the DMA controller 25. In both of the main CPU 22 and the sub CPU 32, various processes are performed using 80 °C which is the failsafe value as the engine water temperature.

Since the forced write-back is not performed on data other than the specific data (in this case, the water temperature sensor abnormality flag as an example), the other data is processed by the conventional write-back method.

### (1-3. Method of Realizing Forced Write-Back Process)

A concrete method of realizing the forced write-back process will be described.

In the engine ECU 10 of the first embodiment, at a stage before compiling software (program code) to be embedded in the engine ECU 10, a code for the forced write-back is inserted by giving a special instruction to a compiler.

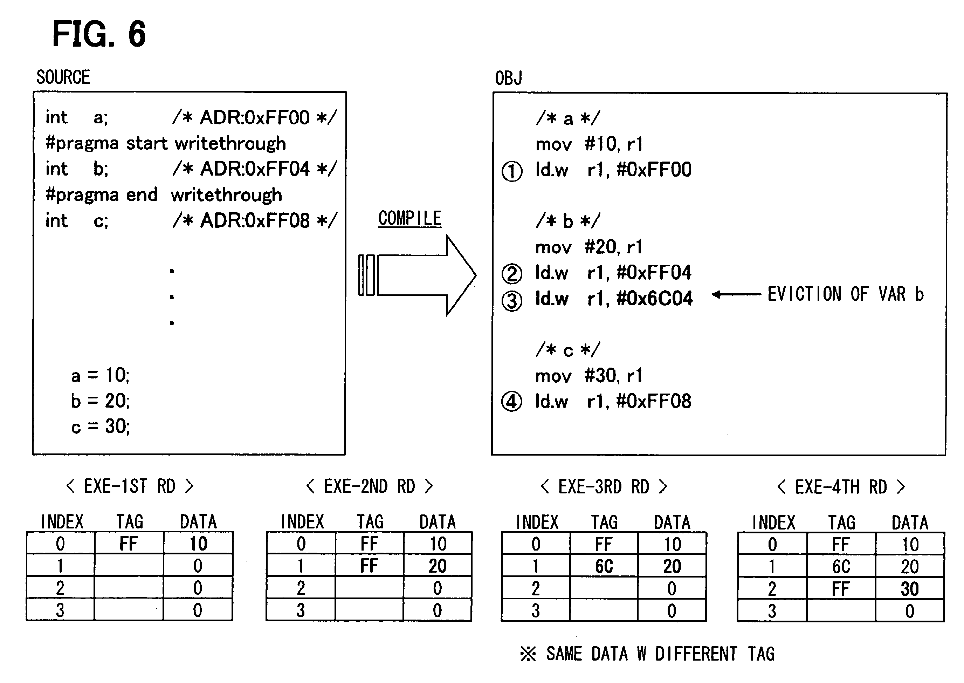

Specifically, as shown in FIG. 6, "#pragma" as a special instruction to a compiler is inserted before and after a variable as a target of the forced write-back (in this example, variable "b") on software (program codes). At the time of compiling the software and generating an assembler code, the compiler automatically inserts an eviction code (write code of dummy data) having the same index as that of the variable "b" and having a different tag for the variable "b" before/after which "#pragma" is inserted.

For example, when the address of the variable "b" is 0xFF04 (index "1" and tag "0xFF"), the write address of the eviction code is set as 0x6C04 (index "1" and tag "0x6C").

In the example of FIG. 6, first, the data "10" of the variable "a" is written together with the tag "FF" to the index °0" of the cache memory. Subsequently, the data "20" of the variable "b" is written together with the tag "0xFF" in the index "1" of the cache memory. Immediately after that, data of a different tag "0x6C" is written in the same index "1", the data "20" of the variable "b" is evicted from the cache memory and written to the main-storage RAM.

In the example, as data used for writing in an eviction code, "20" as the same data (the same register) as the variable "b" is used. However, the invention is not limited to this data. Arbitrary data different from the variable "b" can be also used. In the case of using different data, since at least one automatic insertion code increases, it is preferable to use the same data as the variable "b" from the viewpoint of code efficiency.

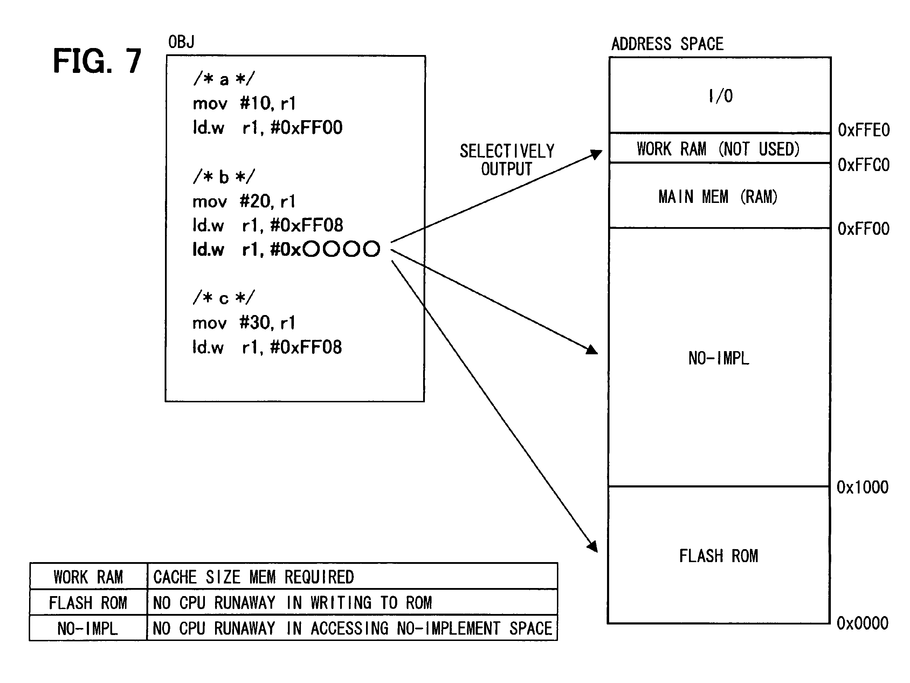

As the write address of the eviction code, for example, as shown in FIG. 7, a work RAM as an unused area in the main-storage RAM can be used. In such a manner, the main-storage RAM can be used efficiently. However, it is to be noted that the same area (e.g., an address space) as the cache memory is required.

On the other hand, the process of writing dummy data with the eviction code is not related to write data itself, so that an address in an area to which data cannot be written such as the flash ROM or a space in which a memory is not mounted can be used. Generally, the flash ROM or un-mounted space has an area much larger than that in the cache memory and is advantageous with respect to the point that the area for storing dummy data is not required in the main-storage RAM. This operation scheme may be implemented, however, on condition that the writing process invalidates the data when the address is invalid without causing the CPU runaway.

### (1-4. Advantageous Effects)

As described above, the first microcomputer 20 of the engine ECU 10 of the first embodiment performs data updating in the write back method. When the data writing process is performed on specific data, immediately after that, the data writing process of writing dummy data having the same index as that of the specific data and having a different tag is performed (forced write-back).

Consequently, the specific data written in the cache memory 23 is immediately evicted from the cache memory 23 by writing of the dummy data and is written to the main-storage RAM 21. That is, with respect to the specific data, the latest data is written not only in the cache memory 23 but also in the main-storage RAM 21 like the write-through method.

Therefore, in the engine ECU 10 of the first embodiment, by using the conventional write-back method as it is, consistency of specific data can be maintained without switching the write-back method to the write-through method.

Since data other than the specific data is updated by the conventional write-back method, the processing speed can be increased as compared with that in the case of using the write-through method. High real-time response requested for the engine ECU 10 can be satisfied.

### (2. Second Embodiment)

An engine ECU of the second embodiment will now be described.

### (2-1. General Configuration)

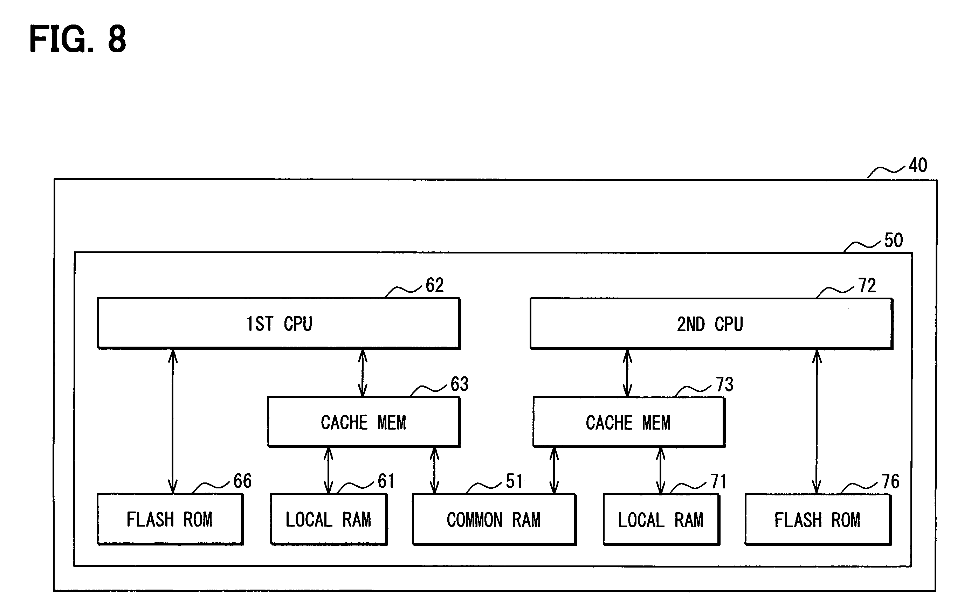

FIG. 8 is a block diagram showing a schematic configuration of an engine ECU 40 of the second embodiment.

A microcomputer 50 mounted on the engine ECU 40 is of a multi-core type having a first CPU 62 for mainly performing a diagnostic process, and a second CPU 72 for mainly performing a process for engine control.

The microcomputer 50 has a common RAM 51 as a main storage shared by the first and second CPUs 62 and 72.

The microcomputer 50 has local RAMs 61 and 71 and cache memories 63 and 73 dedicated to the CPUs 62 and 72, respectively. The microcomputer 50 stores data which is not shared by the CPUs 62 and 72, in the local RAMs 61 and 71, and stores data (for example, engine water temperature and data of the water temperature sensor abnormality flag) shared by the CPUs 62 and 72, in the common RAM 51.

In addition, the microcomputer 50 has flash ROMs 66 and 76 dedicated to read data.

### (2-2. Process Performed by Engine ECU)

The process performed by the engine ECU 40 will now be described.

In the microcomputer 50 of the engine ECU 40, the common RAM 51 is shared by the first CPUs 62 and 72. Even when the data stored in the cache memory 63 of the first CPU 62 is the latest, if the data stored in the common RAM 51 is not the latest (is old), the old data is referred to by the second CPU 72, and a process based on the old data is performed.

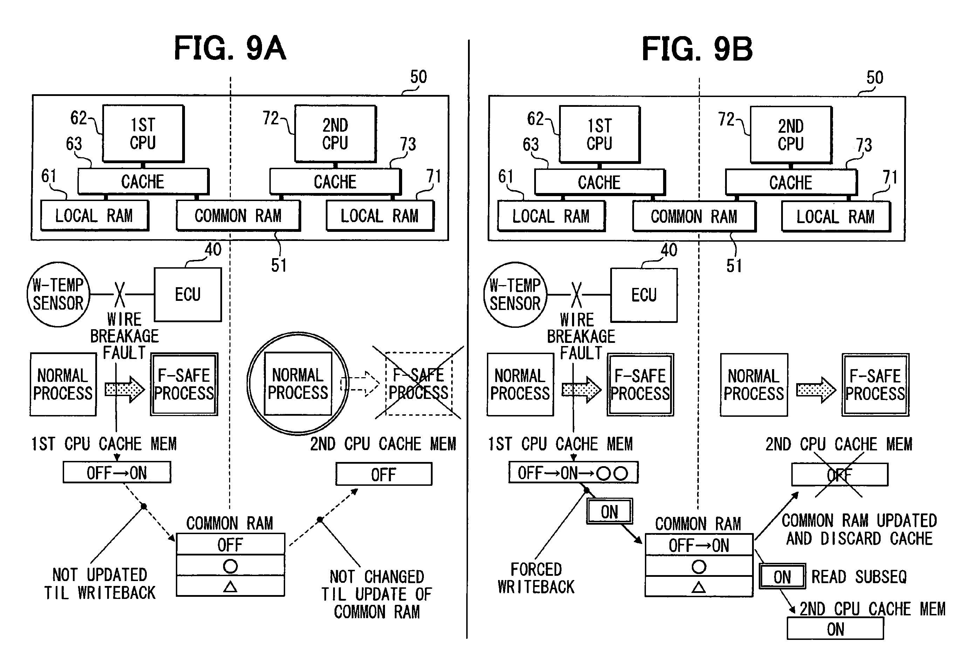

When the first CPU 62 performs the data writing process on specific data (data stored in the common RAM 51) in a manner similar to the first embodiment, immediately after that, the data writing process is performed on dummy data having the same index as that of the specific data and having a different tag, thereby performing a process of forcefully evicting the specific data from the cache memory 63 (hereinbelow, called "forced write-back"). To make the effect of the forced write-back easily understood, process (FIG. 9B) in the case of performing the forced write-back will be described in comparison with process (FIG. 9A) when the forced write-back is not performed.

### (2-2-1. Case Where Forced Write-Back Is Not Performed)

First, the process that does not perform the forced write-back will be described.

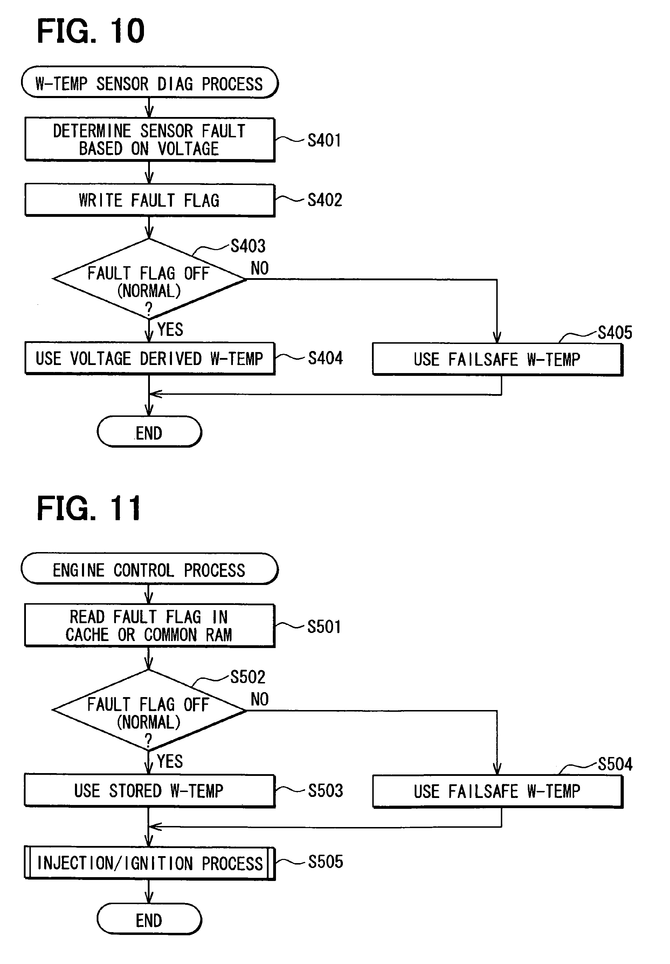

FIG. 10 is a flowchart of water temperature sensor fault diagnosing process periodically executed by the first CPU 62 in accordance with the program stored in the flash ROM 66.

In a manner similar to the process in S101, at the time of converting voltage data of a digital value obtained by A/D converting voltage detected by a water temperature sensor to engine water temperature, the first CPU 62 determines whether a fault (disconnection fault or short-circuit fault) occurs in the water temperature sensor or not on the basis of the voltage data (S401).

The first CPU 62 performs a process of writing the determination result as data of a water temperature sensor abnormality flag (S402).

More concretely, when data of the water temperature sensor abnormality flag is not stored in the cache memory 63 because of the writing of the write-back method, that is, in the case of a mishit, the data of the water temperature sensor abnormality flag stored in the common RAM 51 is updated and, after that, the updated data is loaded to the cache memory 63. That is, the latest data in the water temperature sensor abnormality flag is stored in both of the cache memory 63 and the common RAM 51.

On the contrary, when data of the water temperature sensor abnormality flag is stored in the cache memory 63, that is, in the case of a cache hit, only the data of the water temperature sensor abnormality flag stored in the cache memory 63 is updated. On the other hand, the data of the water temperature sensor abnormality flag stored in the common RAM 51 is not updated until the data of the water temperature sensor abnormality flag stored in the cache memory 63 is evicted.

After that, in a manner similar to the processes in S103 to S105, when the first CPU 62 determines that the data of the water temperature sensor abnormality flag is OFF (normal) (YES in S403), it is set so that the engine water temperature based on the voltage detected by the water temperature sensor is used for various processes (S404). On the other hand, when it is determined that the data of the water temperature sensor abnormality flag is not OFF, that is, the flag is ON (abnormal) (NO in S403), it is set so that engine water temperature (80 °C) of a failsafe value is used for various processes (S405).

FIG. 11 is a flowchart of engine control process executed by the second CPU 72 in accordance with the program stored in the flash ROM 76.

The second CPU 72 reads data of the water temperature sensor abnormality flag stored in the cache memory 73 (or the common RAM 51 when it is not stored in the cache memory 73) (S501), and determines whether the data of the read water temperature sensor abnormality flag is OFF (normal) or not (S502).

When it is determined that the data of the water temperature sensor abnormality flag is OFF (normal) (YES in S502), it is set so that the engine water temperature stored in the cache memory 73 (or the common RAM 51 when the data is not stored in the cache memory 73) is used for various processes (S503).

On the other hand, when it is determined that the data of the water temperature sensor abnormality flag is not OFF, that is, the flag is ON (abnormal) (NO in S502), it is set so that engine water temperature (80 °C) of the failsafe value is used for various processes (S504).

The second CPU 72 executes injection/ignition process based on the set engine water temperature (S505).

By the process as described above, as shown in FIG. 9A, for example, when a disconnection fault of the water temperature sensor is detected by the first CPU 62, if data of the water temperature sensor abnormality flag exists in the cache memory 63, only the data of the cache memory 63 is updated (OFF→ON), and the data in the common RAM 51 remains old (OFF). Consequently, the first CPU 62 performs various processes using 80 °C which is a failsafe value as the engine water temperature. However, the second CPU 72 performs control using engine water temperature (for example, -40 °C) obtained by converting the detection voltage in the disconnection fault state, and the influence of the data discrepancy is exerted on the injection/ignition process and the like.

### (2-2-2. Case Where Forced Write-Back Is Performed)

Next, the process of the forced write-back will be described.

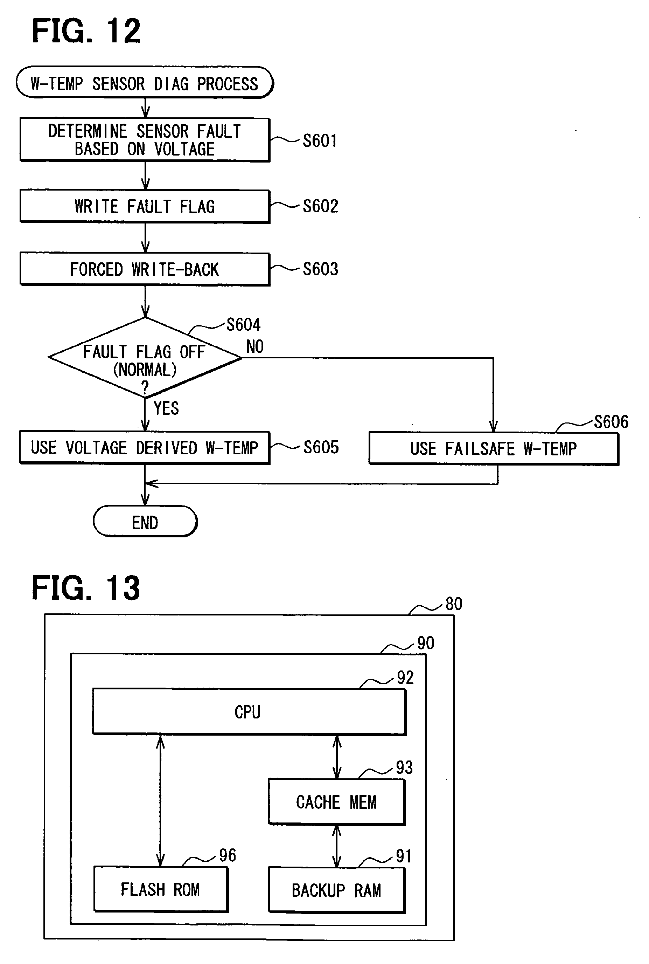

FIG. 12 is a flowchart of water temperature sensor fault diagnosing process periodically executed by the first CPU 62 in accordance with the program stored in the flash ROM 66. The water temperature sensor diagnosing process is compared with that in FIG. 10. The processes in S601, S602, S604, S605, and S606 are the same as those in S401 to S405, respectively. The different point is that process in S603 is added.

Specifically, the first CPU 62 performs a process of writing the result of determination of whether or not the water temperature sensor fails or not as data of the water temperature sensor abnormality flag to the cache memory 63 (S602) and, after that, performs the forced write-back process (S603).

More concretely, the first CPU 62 performs the process of writing data of the water temperature sensor abnormality flag to the cache memory 63 and, immediately after that, performs the process of writing dummy data having the same index as that of the data of the water temperature sensor abnormality flag and having a different tag. By the process, the latest data of the water temperature sensor abnormality flag written in the cache memory 63 immediately before the dummy data is written is evicted from the cache memory 63, and is written in the common RAM 51. As a result, with respect to the data of the water temperature sensor abnormality flag, the latest data is always stored in the common RAM 51. Further, the abnormal state of the water temperature sensor is immediately detected also in the second CPU 72, and the control by using the engine water temperature of 80 °C as the failsafe value is performed.

Since the engine control process executed by the second CPU 72 is as described above (FIG. 11), the description will not be repeated.

By such a process, as shown in FIG. 9B, when a disconnection fault in the water temperature sensor is detected by the first CPU 62, if data of the water temperature sensor abnormality flag exists in the cache memory 63, the common RAM 51 is not updated, and only the data in the cache memory 63 is updated (OFF→ON). Immediately after that, dummy data is overwritten. As a result, the latest data (ON) of the water temperature sensor abnormality flag just written in the cache memory 63 is evicted, and the data of the water temperature sensor abnormality flag stored in the common RAM 51 is updated (OFF→ON).

As a result, the consistency between the water temperature sensor abnormality flag stored in the common RAM 51 and the water temperature sensor abnormality flag stored in the cache memory 73 of the second CPU 72 is lost (i.e., common RAM 51: ON, cache memory 73: OFF), so that the water temperature sensor abnormality flag stored in the cache memory 73 of the second CPU 72 is discarded. Consequently, when the second CPU 72 performs the process of reading the water temperature sensor abnormality flag, a mishit occurs in the cache memory 73 and the latest data is read from the common RAM 51.

As a result, in both of the first and second CPUs 62 and 72, various processes are performed by using the temperature of 80 °C which is the failsafe value as the engine water temperature.

Since the forced write-back is not performed on data other than the specific data (in this case, the water temperature sensor abnormality flag as an example), the other data is processed by the conventional write-back method.

### (2-3. Advantageous Effects)

The engine ECU 40 of the second embodiment can achieve the advantageous effects similar to those of the engine ECU 10 of the first embodiment.

### (3. Third Embodiment)

An engine ECU of a third embodiment will now be described.

### (3-1. General Configuration)

FIG. 13 is a block diagram showing a schematic configuration of an engine ECU 80 of the third embodiment.

A microcomputer 90 of the engine ECU 80 uses, as a main storage, a backup RAM 91 whose operation state is held by a battery even when power supply to the engine ECU 80 is stopped.

In addition, the microcomputer 90 has a CPU 92, a cache memory 93, and a flash ROM 96.

### (3-2. Process Performed by Engine ECU)

The process performed by the engine ECU 80 will be described.

In the microcomputer 90 of the engine ECU 80, even when the data stored in the cache memory 93 is the latest, if the data stored in the backup RAM 91 is not the latest (is old), in the case where power supply to the engine ECU 80 is stopped, the latest data disappears and only old data remains.

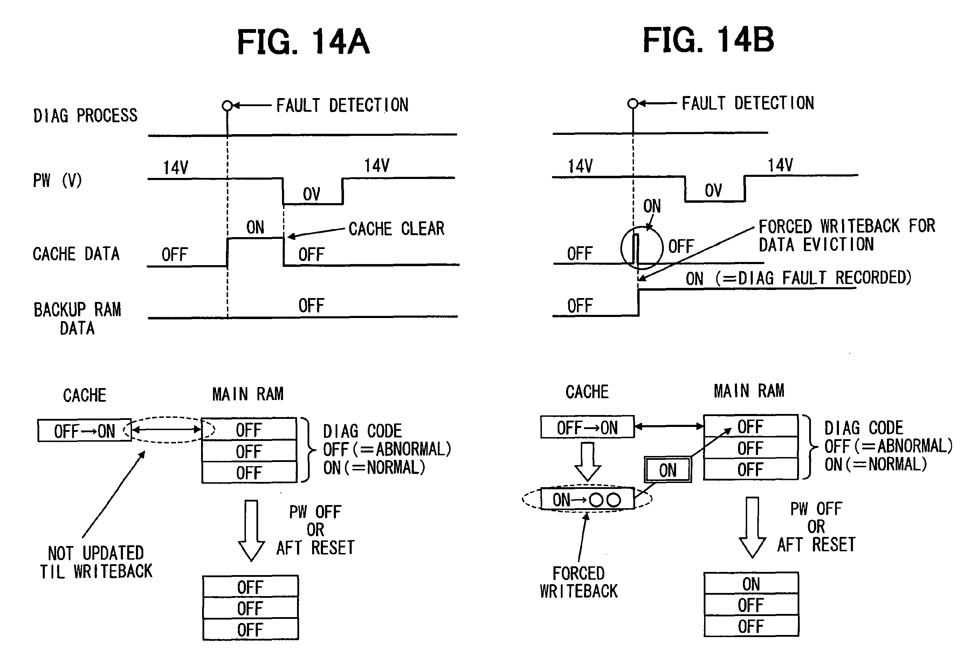

When the CPU 92 performs the data writing process on specific data in a manner similar to the first embodiment, immediately after that, the data writing process is performed on dummy data having the same index as that of the specific data and having a different tag, thereby performing a process of forcefully evicting the specific data from the cache memory 93 (hereinbelow, called "forced write-back"). To make the effect of the forced write-back easily understood, process (FIG. 14B) in the case of performing the forced write-back will be described in comparison with process (FIG. 14A) when the forced write-back is not performed.

### (3-2-1. Case Where Forced Write-Back Is Not Performed)

First, the process that does not perform the forced write-back will be described.

When fault diagnosis in a sensor or the like is performed by a diagnostic process as shown in FIG. 14A and an abnormality is detected, corresponding diagnostic data (for example, data of the water temperature sensor abnormality flag) is updated (OFF→ON). When diagnosis data exists in the cache memory 93, only the data stored in the cache memory 93 is updated, and the diagnostic data stored in the backup RAM 91 is not updated until the diagnostic data stored in the cache memory 93 is evicted (remains OFF).

When the microcomputer 90 in the engine ECU 80 is reset or the power supply to the engine ECU 80 is stopped (14V to 0V) by turn-off of an ignition switch (IG-SW) of the vehicle before the diagnosis data of the backup RAM 91 is updated, although data stored in the backup RAM 91 is held by the battery voltage, the data in the cache memory 93 is deleted, and abnormality data detected by the fault diagnosis disappears. Therefore, even if the power supply restarts (0V to 14V), the data in the backup RAM 91 remains OFF (normal), and the number of times of detecting abnormality becomes smaller than the actual number of detection times. Since the number of abnormality detection times is also used as the condition of turn-on of a MIL (Malfunction Indicator Light), it is also a problem in terms of law.

### (3-2-2. Case Where Forced Write-Back Is Performed)

Next, the process of the forced write-back will be described.

When a fault in a sensor or the like is detected as shown in FIG. 14B, if diagnosis data exists in the cache memory 93, the backup RAM 91 is not updated but only the data in the cache memory 93 is updated (OFF→ON). By immediately overwriting dummy data by the forced write-back process, the diagnosis data which has been just written in the cache memory 93 is evicted, and the diagnosis data stored in the backup RAM 91 is updated (OFF→ON).

When the microcomputer 90 in the engine ECU 80 is reset or the power supply to the engine ECU 80 is stopped (14V to 0V) by turn-off of an ignition switch (IG-SW) of the vehicle, since data stored in the backup RAM 91 is held by the battery voltage, abnormality data detected by the fault diagnosis is held and the number of abnormality detection times can be also counted accurately.

### (3-3. Advantageous Effects)

The engine ECU 80 of the third embodiment can achieve the advantageous effects similar to those of the engine ECU 10 of the first embodiment.

### (4. Other Embodiments)

Although the embodiments of the present invention have been fully described above, obviously, the invention can be also variously modified.

### (4-1. Modification of Method of Realizing Forced Write-Back Process)

In the foregoing embodiments, as shown in FIG. 6, by inserting "#pragma" as a special instruction to a compiler before and after a variable to be desirably subject to the forced write-back on software, an eviction code is automatically inserted. However, the invention is not limited to the method. For example, the following realizing method can be employed.

### (4-1-1. Method of Automatically Inserting Eviction Code in Data in Certain Memory Area)

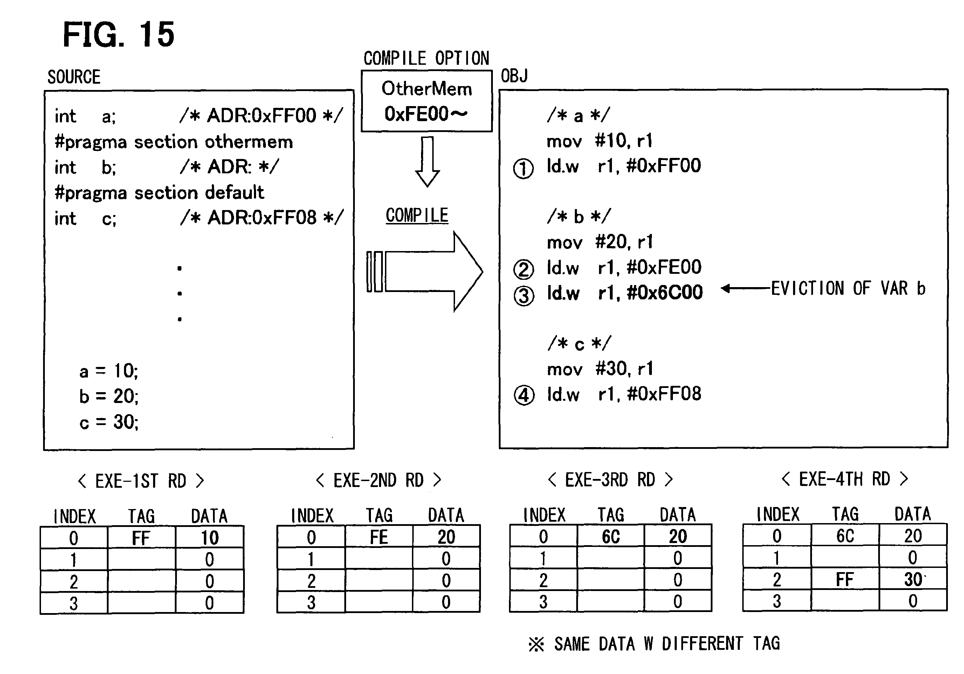

The method shown in FIG. 15 of specifying data to which the eviction code is inserted differs from that shown in FIG. 6. A certain memory area (0xFE00...) is set as a location ("othermem") of a variable requiring the forced write-back process, and the variable desired to be arranged in the area is processed by memory allocation using #pragma of "pragma section XXX". A compiler automatically inserts a write instruction (i.e., an eviction code) to the address 0x6C00 of the same index and a different tag to the variable disposed in the same area.

In the above method, different from the method of FIG. 6, the variable "b" is arranged in the variable area "othermem" requiring the forced write-back process. In an assembler object code, the variable is arranged in 0xFE00 as the address of "othermem".

### (4-1-2. Method of Embedding Eviction Code At Stage Of Source Code)

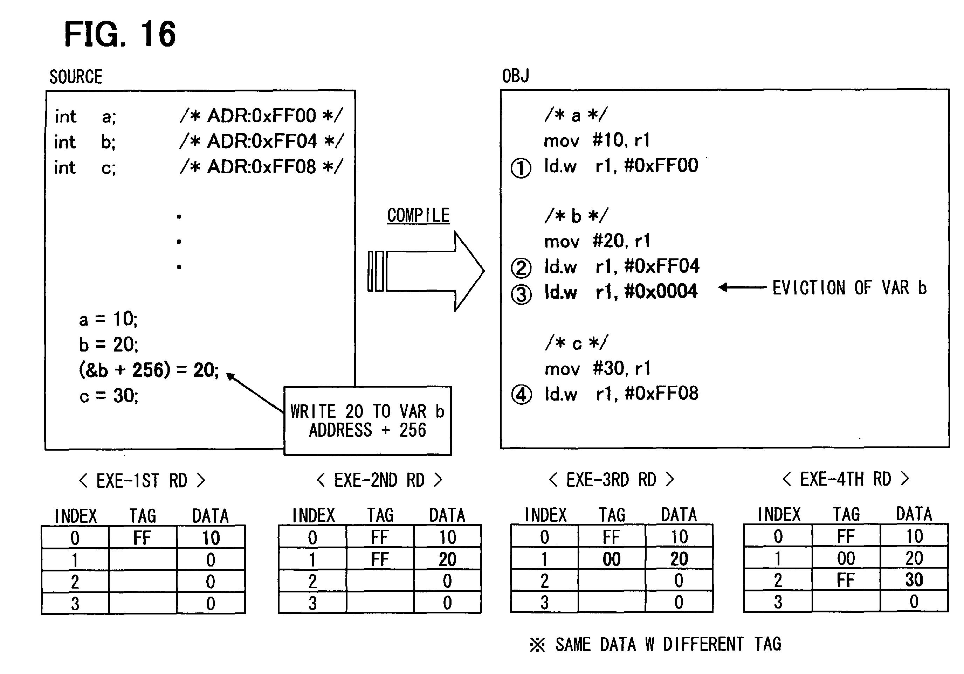

A method shown in FIG. 16 is, different from the methods shown in FIGS. 6 and 15, a method of embedding an eviction code at the stage of a source code in software by a programmer. In the example shown in FIG. 16, a code of writing, immediately after writing normal data "20" in the variable "b", the same data "20" to an address obtained by adding an arbitrary offset (in this example, +256) so that the index will become the same to the address of the variable "b" is embedded.

Therefore, by an object code compiled by the compiler, data is written in the address 0x0004 obtained by adding +256 to the address 0xFF04 of the variable "b".

This method has an advantage such that the eviction can be realized even by a compiler that does not have an eviction code automatic insertion function.

### (4-2. Application to Microcomputers other than Engine ECU)

Although the configuration of applying the present invention to the microcomputer of the engine ECU has been described in the foregoing embodiments, the invention is not limited to the configuration. The invention can be applied to a microcomputer of a vehicle control unit that controls a vehicle component other than the engine. The invention can be also applied to a data processor other than the vehicle control unit.

## Claims

1. A data processing apparatus (10) capable of updating data in a write-back method, the apparatus (10) comprising:
a main memory (21, 31) for storing data;
a processor (22, 32) for performing a data read process to read data stored in the main memory (21, 31) and for performing a data write process to write data to the main memory (21, 31); and
a cache memory (23, 33) for storing a part of the data stored in the main memory (21, 31) together with an address of the part of the data and for one of serving as an alternative of the main memory (21, 31) and serving as a co-storage of the main memory (21, 31) in the data read process and the data write process by the processor (22, 32), wherein
the processor (22, 32) performs the data write process of dummy data that occupies a same write position in the cache memory (23, 33) as specific data after performing the data write process of the specific data having a different address relative to the dummy data.

2. The data processing apparatus (10) of claim 1 further comprising a plurality of combinations of the main memory (21, 31) and the processor (22, 32), and a transfer unit (25, 35) for transferring data between the main memories.

3. The data processing apparatus (10) of claim 1 further comprising a plurality of the processors (22, 32), wherein the main memory (21, 31) is shared by the plurality of the processors (22, 32).

4. The data processing apparatus (10) of claim 1, wherein an operation condition of the main memory (21, 31) is retained by using a battery even when a power supply for the data processing apparatus (10) is terminated.

5. The data processing apparatus (10) of any one of claims 1 to 4, wherein
the address of the dummy data is an unused area of the main memory (21, 31).

6. The data processing apparatus (10) of any one of claims 1 to 4 further comprising:
a read-only memory unit (26, 36) that prohibits data writing thereto, wherein
the address of the dummy data is an address of the read-only memory unit (26, 36).

7. The data processing apparatus (10) of any one of claims 1 to 4, wherein the address of the dummy data is an address where no memory unit is implemented.

8. The data processing apparatus (10) of any one of claims 1 to 7, wherein the data processing apparatus (10) serves as a control unit for controlling a vehicle.

9. The data processing apparatus (10) of claim 8, wherein the data processing apparatus (10) serves as a controller for controlling a driving power generation unit of a vehicle.

10. A program product of computer readable instructions stored in a computer readable medium for controlling a computer to be serving as a data processing apparatus (10), the apparatus (10) capable of updating data in a write-back method by using a main memory (21, 31) for storing data, a processor (22, 32) for performing a data read process to read data stored in the main memory (21, 31) and for performing a data write process to write data to the main memory (21, 31), and a cache memory (23, 33) for storing a part of the data stored in the main memory (21, 31) together with an address of the part of the data and for serving one of as an alternative of the main memory (21, 31) and as a co-storage of the main memory (21, 31) in the data read process and the data write process, the program product comprising an instruction of:
controlling the processor (22, 32) to perform the data write process of dummy data that occupies a same write position in the cache memory (23, 33) as specific data after controlling the processor (22, 32) to perform the data write process of the specific data having a different address relative to the dummy data.
